# EUROPÄISCHE PATENTSCHRIFT

(11) **EP 2 625 077 B1**
(45) Veröffentlichungstag und Bekanntmachung des Hinweises auf die Patenterteilung: **23.08.2017**
(21) Anmeldenummer: 11764166.2
(22) Anmeldetag: 29.09.2011
(51) Int. Cl.: B60T 8/40

(54) **BREMSANLAGE UND VERFAHREN ZU DEREN BETRIEB**
BRAKE SYSTEM AND A METHOD FOR OPERATING SAME
SYSTÈME DE FREINAGE ET SON PROCÉDÉ DE FONCTIONNEMENT

(30) Priorität: 22.09.2011 DE 102011083237; 04.10.2010 DE 102010041911
(43) Veröffentlichungstag der Anmeldung: 14.08.2013
(73) Patentinhaber: Continental Teves AG & Co. oHG, 60488 Frankfurt (DE)
(72) Erfinder: SCHIEL, Lothar, 65719 Hofheim (DE)
(86) Internationale Anmeldenummer: PCT/EP2011/066995
(87) Internationale Veröffentlichungsnummer: WO 2012/045656

(56) Entgegenhaltungen:
- WO-A1-2009/121645
- WO-A2-2009/003781
- DE-A1- 19 640 767

## Beschreibung

Die Erfindung betrifft eine Bremsanlage für Kraftfahrzeuge vom Typ "Brake-by-Wire", insbesondere ohne einen Bremskraftverstärker, mit einer mittels eines Bremspedals betätigbaren hydraulischen Betätigungseinrichtung, an welche Radbremsen angeschlossen sind, und einer hydraulisch betätigbaren Simulationseinrichtung mit mindestens einem elastischen Element, die dem Fahrzeugführer ein angenehmes Pedalgefühl vermittelt. Sie betrifft weiterhin ein Verfahren zum Betrieb einer derartigen Bremsanlage.

In der Kraftfahrzeugtechnik finden "Brake-by-Wire"-Bremssysteme eine immer größere Verbreitung. Bei diesen Bremssystemen kann die Bremse ohne aktives Zutun des Fahrzeugführers auf Grund elektronischer Signale "fremd"-betätigt werden. Diese elektronischen Signale können beispielsweise von einem elektronischen Stabilitätsprogramm ESC oder einem Abstandsregelsystem ACC ausgegeben werden. Zudem kann auf eine Betätigung des Bremssystems ganz oder teilweise verzichtet werden, wenn eine vom Fahrzeugführer über eine Bremspedalbetätigungskraft angeforderte Bremswirkung beispielsweise durch Umschalten eines elektrischen Fahrzeugantriebs in einen Generatorbetrieb erzielt wird.

Derartige elektrohydraulisch ausgestaltete Bremssysteme bzw. Bremsanlagen weisen gewöhnlich neben der hydraulischen Betätigungseinrichtung eine Simulationseinrichtung auf, in die bei Betätigung des Bremspedals Bremsflüssigkeit bzw. Druckmittel aus der Betätigungseinrichtung geleitet wird. Die Simulationseinrichtung weist dabei gewöhnlich ein elastisches Simulatorelement, beispielsweise eine Feder, auf, welches bei Einleitung des Druckmittels, beispielsweise über einen dadurch bewegbaren Kolben, gespannt wird. Auf diese Weise kann einerseits ein reproduzierbarer Zusammenhang zwischen Pedalweg und Bremsmoment realisiert werden. Andererseits wird dadurch versucht, dem Fahrer ein von herkömmlichen hydraulischen Bremsanlagen bekanntes Pedalgefühl zu vermitteln. Die Auslegung und konstruktive Realisierung eines solchen Wegsimulators stellt eine komplexe Herausforderung dar.

Aus der WO 2009/003781 A2 ist eine Bremsanlage mit einer bremspedalbetätigbaren, hydraulischen Betätigungseinheit, einem Vakuum-Bremskraftverstärker, einem Hauptbremszylinder und einem Simulator bekannt. Der Druckraum der Betätigungseinheit ist über eine hydraulische Verbindung, in der ein stromlos offenes Ventil angeordnet ist, mit dem Raum des Simulators verbunden ist. Bei einer Betätigung des Bremspedals durch den Fahrer wird über das offene Ventil Druckmittel in den Raum des Simulators befördert und so unmittelbar mittels des Simulators ein Bremspedalgefühl für den Fahrer bereitgestellt.

Der vorliegenden Erfindung liegt die Aufgabe zugrunde, eine Fahrzeugbremsanlage bereitzustellen, deren Funktionstüchtigkeit während der Normalbremsfunktion prüfbar ist und welche dem Fahrer ein von konventionellen hydraulischen Bremsanlagen bekanntes Pedalgefühl vermittelt. Insbesondere soll das Pedalgefühl gegenüber bekannten derartigen Bremsanlagen verbessert werden. Weiterhin soll ein Verfahren zum Betreiben einer derartigen Bremsanlage bereitgestellt werden.

In Bezug auf die Bremsanlage wird diese Aufgabe erfindungsgemäß durch eine Bremsanlage gemäß Anspruch 1 gelöst.

Vorteilhafte Ausgestaltungen der Erfindung sind Gegenstand der Unteransprüche.

Die Erfindung geht von der Überlegung aus, dass bekannte Lösungen, in denen unmittelbar bei Betätigung des Bremspedals Druckmittel in die Simulationseinrichtung abgeführt wird, nur unzureichend ein Pedalgefühl vermitteln können, wie es von konventionellen hydraulischen Hilfsbremskraftanlagen mit Unterdruck-Bremskraftverstärker bekannt ist. Bei derartigen Bremsanlagen ist nämlich in einem Komfortbereich von bis zu ca. 25 bis 30 mm Pedalweg nach Überwinden der Ansprechkraft des Verstärkers praktisch keine für den Fahrer wahrnehmbare Krafterhöhung mehr notwendig, um eine Bremsung mit bis zu 0,3 g Verzögerung durchzuführen. In diesem Bereich wirkt nämlich der so genannte "Springer" bzw. die "Springerfunktion". Die Bremsbetätigung wird dabei praktisch vollständig vom Bremskraftverstärker durchgeführt, der Fahrer muss lediglich durch Pedalbetätigung das pneumatische Verstärkerventil aktivieren.

Wird nun unmittelbar die Simulationseinrichtung betätigt, erfährt der Fahrer auf Grund der Reibung und der positiven (steigenden) Federkonstante des (federartigen) Simulatorelementes einen recht hohen Widerstand. Das dadurch hervorgerufene Pedalgefühl unterscheidet sich stark von dem komfortablen Gefühl, das der Fahrer von den genannten Hilfsbremssystemen gewohnt ist. Auf Grund des größeren Widerstandes kann der Fahrer auch in Gefahrensituationen verleitet werden, das Bremspedal nicht schnell und/oder stark genug zu betätigen.

Wie nunmehr erkannt wurde, lässt sich in einem Brake-by-Wire-System mit Simulationseinrichtung bzw. mit Simulator die Realisierung eines von oben beschriebenen Hilfsbremsanlagen bekannten Pedalgefühls dadurch erreichen, dass eine hydraulische Verbindung von der Betätigungseinrichtung zu dem Vorratsbehälter bzw. Druckmittelbehälter bereitgestellt wird, welche bei Bedarf getrennt werden kann. Diese Ausgestaltung ermöglicht, während eines vorgegeben Pedalwegs diese Verbindung geöffnet zu halten, so dass Druckmittel in den Vorratsbehälter befördert wird und auf Grund der (federartigen und reibungsartigen) Widerstände der Simulatorkomponenten nicht in den Simulator abgeführt wird, so dass der Kolben im Wegsimulator nicht betätigt wird und kein Widerstand durch das Federelement auf das Bremspedal ausgeübt wird. Dadurch kann eine der Springerfunktion vergleichbare, flache Pedalweg-Kraftlinie realisiert werden.

Bevorzugt ist die Bremsanlage in einer so genannten "Brake-by-Wire"-Betriebsart sowohl vom Fahrzeugführer als auch unabhängig vom Fahrzeugführer ansteuerbar, vorzugsweise wird sie in der "Brake-by-Wire"-Betriebsart betrieben und kann in mindestens einer Rückfallbetriebsart betrieben werden, in der nur der Betrieb durch den Fahrzeugführer möglich ist.

Vorteilhafterweise ist das Absperrventil als stromlos offenes elektrisch ansteuerbares Ventil ausgeführt. Das heißt, im stromlosen Zustand ist die hydraulische Verbindung zwischen der Betätigungseinrichtung und dem Druckmittelbehälter offen. Auf diese Weise kann im Falle eines Ausfalls der Energieversorgung verhindert werden, dass Druckmittel in den Simulator strömt und in der Rückfallebene nicht mehr zur Verfügung steht.

Die Betätigungseinrichtung weist vorteilhafterweise einen Druckraum für Druckmittel auf, welches bei Betätigung des Bremspedals in die hydraulische Verbindung gefördert wird. Dieser Druckraum ist vorzugsweise mit dem Druckmittelbehälter hydraulisch derart verbunden, dass bei vollständig gelöstem Bremspedal eine hydraulische Verbindung zum Druckmittelbehälter besteht, diese aber bei betätigtem Bremspedal getrennt wird.

Zur Erfassung eines Betätigungswegs des Bremspedals umfasst die Betätigungseinrichtung vorteilhafterweise einen Sensor, insbesondere einen Wegsensor, welcher bevorzugt redundant ausgeführt ist. Auf Grund der vorgesehen hydraulischen Verbindung zum Vorratsbehälter kann zu diesem Zweck ein Drucksensor nicht oder nur sehr eingeschränkt eingesetzt werden. Er kann aber zusätzlich vorsehen sein zur Erfassung des Bremswunsches bei zugeschalteter Simulationseinrichtung.

In einer bevorzugten Ausführungsform ist die Bremsanlage derart ausgeführt, dass ein Zuschalten der Simulationseinrichtung erst nach Schließen des Absperrventils gegeben ist. Bis zum Schließen des Absperrventils spürt auf diese Weise der Fahrer nur einen geringfügigen Gegendruck im Pedal. Das Schließen des Absperrventils kann dabei nach einem Pedalweg von ca. 25 bis 30 mm geschehen. Der durch den Simulator entgegengebrachte Gegendruck wird dann erst bei größeren Pedalwegen spürbar in einem Bereich von starken Bremsvorgängen, in denen der höhere Gegendruck den Fahrer nicht negativ beeinträchtigt.

Die Bremsanlage umfasst für den Brake-by-Wire-Betrieb vorteilhafterweise eine elektrisch steuerbare Druckbereitstellungseinrichtung, durch die - unter Berücksichtigung des vom Fahrer ausgedrückten Bremswunsches - Bremsdruck in den Radbremsen aufgebaut werden kann.

Die Druckbereitstellungseinrichtung wird vorteilhafterweise durch eine Zylinder-Kolben-Anordnung gebildet, deren Kolben durch einen elektromechanischen Aktuator betätigbar ist. Durch den Kolben wird vorteilhafterweise Druckmittel aus einer Druckkammer in die Radbremsen verschoben.

Außerhalb der Betriebsart "Brake-by-Wire", also in der Rückfallbetriebsart, ist die Simulationseinrichtung vorzugsweise drucklos geschaltet, so dass das gesamte Druckmittel für die Bremsung des Fahrzeuges zur Verfügung steht.

In Bezug auf das Verfahren zum Betreiben einer Bremsanlage wird die oben genannte Aufgabe erfindungsgemäß dadurch gelöst, dass bei einer Betätigung des Bremspedals, insbesondere in der Betriebsart "Brake-by-Wire", das Absperrventil erst in seine geschlossene Schaltstellung umgeschaltet wird, wenn der Betätigungswegs des Bremspedals einen vorgegebene Grenzwert überschreitet. Der Grenzwert wird vorteilhafterweise in Abhängigkeit von der Fahrsituation, also dynamisch, vorgegeben.

Die Vorteile der Erfindung bestehen insbesondere darin, dass durch eine hydraulische Verbindung zwischen Betätigungseinheit und Simulator, die trennbar mit dem Druckmittelbehälter verbunden ist, ein Pedalgefühl ähnlich des Springerverhaltens realisierbar ist. Ein Vorteil der Erfindung ist es also, die unverstärkte Simulatorbetätigung mit einer ergonomisch optimierten und dem konventionellen "Springerverhalten" sehr ähnlichen Pedalcharakteristik darzustellen.

Durch ein Trennen der Verbindung zum Druckmittelbehälter nach einem vorgegebenen Pedalweg erfährt der Fahrer bis zu dieser Position des Pedals kaum Widerstand, so dass das Pedalgefühl von Hilfsbremsanlagen mit Vakuum-Bremskraftverstärker nachgebildet werden kann. Außerdem kann die Funktion des Absperrventils in der Normalbremsfunktion ohne Irritation des Fahrers geprüft werden. Diese sicherheitsrelevante Verbindung kann vom System bei jeder Pedalbetätigung auf ihre Funktionstüchtigkeit geprüft werden.

Durch eine Erfassung des Pedalwegs mit Hilfe eines - bevorzugt redundant ausgebildeten - Wegsensors kann der Bremswunsch des Fahrers präzise erfasst werden.

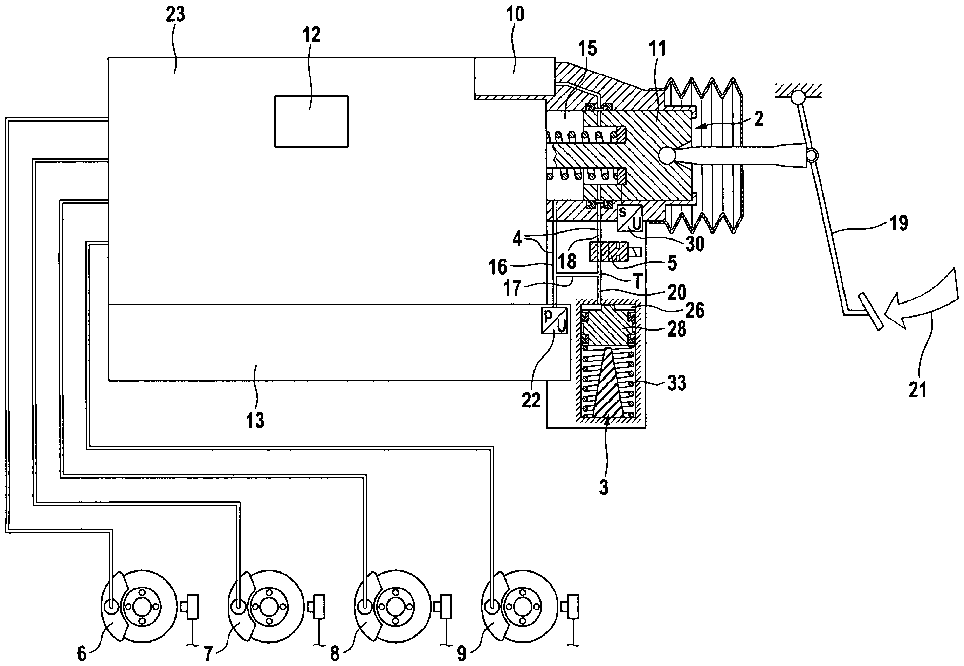

Ein Ausführungsbeispiel der Erfindung wird anhand einer Zeichnung näher erläutert. Darin zeigt schematisch die Figur ein Ausführungsbeispiel einer Bremsanlage mit einem Pedalgefühlsimulator.

Die in der Figur dargestellte beispielsgemäße elektrohydraulische Bremsanlage umfasst eine Betätigungseinrichtung 2 mit einem Tandemhauptbremszylinder, eine Simulationseinrichtung 3, ein an die Betätigungseinrichtung 2 angeschlossenes "By-Wire"-System 23 mit einer Radbremsdruckmodulationseinrichtung (nicht dargestellt) und einer elektrisch steuerbaren Druckbereitstellungseinrichtung 12, und eine elektronische Steuer- und Regeleinheit (ECU) 13. An die Radbremsdruckmodulationseinrichtung sind Radbremsen 6, 7, 8, 9 angeschlossen. Die hydraulische Betätigungseinrichtung 2 ist über ein Bremspedal 19 betätigbar und umfasst zumindest einen Betätigungskolben 11 sowie einen Druckraum 15. Der Betätigungsweg des Bremspedals 19 wird mittels eines vorzugsweise redundant ausgeführten Wegsensors 30 erfasst, der z.B. den Weg des Kolbens 11 sensiert und somit der Fahrerwunscherkennung bzw. einer Sollwertgenerierung in der elektronischen Steuer- und Regeleinheit 13 dient.

Die Simulationseinrichtung 3 stellt einen hydraulisch betätigten Pedalgefühlsimulator dar und umfasst beispielsgemäß ein elastisches Element 33 (z.B. eine Simulatorfeder) und einen Kolben 28, der eine Begrenzung eines hydraulischen Raums 26 darstellt, in den Druckmittel - beispielsweise bei Betätigung des Bremspedals 19 - gefördert werden kann.

Die dargestellte Bremsanlage ist als "Brake-by-Wire"-Bremsanlage ausgeführt. Zum Radbremsdruckaufbau im "Brake-by-Wire"-Betrieb ist die elektrohydraulische Druckbereitstellungseinrichtung 12 vorgesehen. Die elektrohydraulische Druckbereitstellungseinrichtung 12 umfasst vorteilhafterweise im Wesentlichen eine hydraulische Zylinder-Kolben-Anordnung sowie einen elektromechanischen Aktuator, der beispielsweise durch einen Elektromotor mit einem Untersetzungsgetriebe gebildet wird, der eine translatorische Bewegung eines hydraulischen Kolbens gewährleistet, so dass in einem Druckraum der hydraulischen Zylinder-Kolben-Anordnung ein hydraulischer Druck aufgebaut wird. Der elektromechanische Aktuator wird von einem elektrischen Energiespeicher mit Energie versorgt. Die Bewegung des Kolbens wird indirekt mittels zumindest eines Drehwinkelsensors erfasst, der die Rotorlage des elektromechanischen Aktuators sensiert. Der Druckraum ist mit den Radbremsen 6 bis 9 verbindbar.

In "Brake-by-Wire"-Bremssystemen wird der erforderliche Bremsdruck bei Betriebsbremsungen ohne direkte Beteiligung des Fahrers von einer pneumatischen, elektrischen bzw. elektrohydraulischen Betätigungseinheit bereitgestellt. Dem Fahrer wird in derartigen Systemen durch eine Simulationseinrichtung bzw. den so genannten Wegsimulator das von herkömmlichen Bremssystemen bekannte Pedalgefühl vermittelt. Die Auslegung und konstruktive Realisierung eines solchen Wegsimulators stellt eine komplexe Herausforderung dar, da der Wegsimulator möglichst eine Weg-Kraft-Kennlinie des Bremspedals einer konventionellen Hilfskraftbremsanlage mit Unterdruck-Bremskraftverstärker simulieren soll.

Entscheidend für die gute Dosierbarkeit der Bremse und für das Komfortgefühl des Fahrers ist der Bereich des Pedalweges bis ca. 35 bis 40 mm, in welchem die überwiegende Anzahl aller Bremsungen im Fahrzeugleben stattfindet. In einem Bremssystem, das über einen Unterdruck-Bremskraftverstärker verfügt, ist nach Überwinden der Ansprechkraft praktisch keine für den Fahrer wahrnehmbare Krafterhöhung notwendig, um eine Bremsung mit bis zu 0,3 g durchzuführen. In diesem Bereich wirkt der so genannte "Springer". Hier wird die Bremsbetätigung praktisch vom Bremskraftverstärker durchgeführt, der Fahrer muss lediglich durch Pedalbetätigung das pneumatische Verstärkerventil aktivieren.

Die dargestellte Bremsanlage ist dazu ertüchtigt, das "Springer"-artige Pedalgefühl dieser Hilfsbremssysteme zu simulieren bzw. bereitzustellen. Dazu ist die Betätigungseinrichtung 2 über eine hydraulische Verbindung 4 mit der Simulationseinrichtung 3 verbunden. Die hydraulische Verbindung 4 umfasst einen von dem Druckraum ausgehenden Leitungsabschnitt 16, welcher mit einem Leitungsabschnitt 17 verbunden ist. Der Leitungsabschnitt 17 verzweigt sich an einem T-förmigen Verzweigungspunkt T in einen Leitungsabschnitt 20, der in den hydraulischen Raum 26 mündet, und einen Leitungsabschnitt 18, der mit dem Druckmittelbehälter 10 hydraulisch verbunden ist. In den Leitungsabschnitt 18 ist ein vorzugsweise stromlos offenes hydraulisches Ventil 5 geschaltet, welches im geschalteten, also geschlossenen Zustand, die Verbindung zu einem, insbesondere unter Atmosphärendruck stehenden, Druckmittelbehälter 10 trennt. Zur Bestimmung des in der hydraulischen Verbindung 4 herrschenden Druckes ist ein Drucksensor 22 vorgesehen.

Bei einer Bremsung bei funktionstüchtiger "By-Wire"-Bremsanlage wird das SO-Aktivierungsventil 5 (SO: stromlos offen) erst nach Überfahren eines definierten Pedalweges geschlossen. Ein Druckaufbau im hydraulischen Simulatorbetätigungskreis und eine Aktivierung des eigentlichen Simulators bzw. der Simulationseinrichtung 3 sind erst ab diesem Punkt möglich. Bis zum Schließen des Ventils 5, welches von der Steuer- und Regeleinheit 13 angesteuert wird, fließt Druckmittel aus dem Druckraum 15 im Wesentlichen über die Leitungsabschnitte 16, 17, 18 der hydraulischen Verbindung 4 in den Druckmittelbehälter 10. Erst nach dem Schließen des als Absperrventil ausgestalteten Ventils 5 wird Druckmittel in die Simulationseinrichtung 3 gefördert und das elastische Element 33 gespannt, wodurch der Fahrer nun gegenüber vorher einen Anstieg der Gegenkraft am Bremspedal 19 spürt. Auf diese Weise wird bei funktionstüchtiger "By-Wire"-Bremsanlage die simulierte Pedalcharakteristik im ersten Bereich des Pedalweges (bis ca. 30 % Bremsverzögerung) sehr flach gehalten (minimale Kraftzunahme über Pedalweg).

Durch eine permanente Erfassung des Pedalweges mit Hilfe des Wegsensors 30 und des hydraulischen Druckes im Simulatorkreis mit Hilfe des Drucksensors 22 ist die Überwachung der Vorrichtung bei jeder Bremsbetätigung durch den Fahrer möglich. Das Ventil 5 wird vorteilhafterweise nach einem vorgegebenen Pedalweg in getakteter Weise angesteuert, bevor es dann vollständig geschlossen wird. Geschieht dies im Bereich von wenigen Millisekunden, was mit modernen Ventilen ohne weiteres möglich ist, spürt der Fahrer diese Takte nicht. Durch gezielte, getaktete Ansteuerung des Ventils 5 kann so auch eine vorgegebene Pedalweg/Kraft Kennlinie umgesetzt werden.

Ein fehlerhaft geschlossenes SO-Ventil 5 kann im Normalbetrieb mit Hilfe des Drucksensors 22 ohne zusätzliche Prüfzyklen erkannt werden. Zudem kann auch während eines Bremsvorganges bei geöffnetem Ventil 5 dessen Funktionsweise ohne Beeinträchtigung des Fahrers überprüft werden. Dazu wird das Ventil 5 innerhalb kurzer Zeit, bevorzugt innerhalb weniger Millisekunden, geschlossen und dann wieder geöffnet. Dieser Vorgang kann auch mehrmals hintereinander durchgeführt werden. Durch das kurzzeitige Schließen des Ventils 5 entstehen Druckschwankungen im Simulatorkreis, d. h. auch in der hydraulischen Verbindung 4, die durch den Drucksensor 22 messbar sind und mit deren Hilfe der Zustand des Ventils 5 diagnostiziert werden kann.

Bei der in der Figur dargestellten "By-Wire"-Bremsanlage (Fremdkraftbremsanlage) soll das oben beschriebene Pedalverhalten einer konventionellen Hilfskraftbremsanlage mit Unterdruck-Bremskraftverstärker mit einem Simulator ohne Bremskraftverstärker dargestellt werden. Hierbei werden vom Fahrer bei Betätigung des Pedals 19 in Betätigungsrichtung 21 ein durch Federkraft vorgespannter und mit Hydraulikdichtungen abgedichteter Betätigungskolben 11 sowie ein ebenfalls federvorgespannter Simulator 3 mit Hydraulikdichtungen bewegt. Diese Konstruktionselemente haben naturgemäß eine Reibung und eine positive (steigende) Federrate. Um die Springerfunktion darzustellen, wird das Ventil 5 erst nach Zurücklegen eines vorgegeben Pedalweges geöffnet, so dass während dieses Pedalweges die Pedalweg/Kraft-Kennlinie sehr flach verläuft. Erst danach wird das Trennventil 5 geschlossen, was in gepulster Art und Weise geschehen kann. Dadurch wird eine ansteigende Pedalweg/Kraft-Kennlinie dargestellt.

Da der Simulator bzw. die Simulationseinrichtung 3 erst im ansteigenden Teil der Pedalweg/Kraft-Linie eingesetzt wird, kann er in einfacher Weise gefertigt sein. Insbesondere ein elastisches Element 33 mit progressiv veränderbarer Federrate ist nicht notwendig.

### Bezugszeichenliste

- 2: Betätigungseinrichtung
- 3: Simulationseinrichtung
- 4: hydraulische Verbindung
- 5: Ventil
- 6: Radbremse
- 7: Radbremse
- 8: Radbremse
- 9: Radbremse
- 10: Druckmittelbehälter
- 11: Betätigungskolben
- 12: Druckbereitstellungseinrichtung
- 13: Steuer- und Regeleinheit
- 15: Druckraum
- 16: Leitungsabschnitt
- 17: Leitungsabschnitt
- 18: Leitungsabschnitt
- 19: Bremspedal
- 20: Leitungsabschnitt
- 21: Betätigungsrichtung
- 22: Drucksensor
- 23: By-Wire-System
- 26: hydraulischer Raum
- 28: Kolben
- 30: Wegsensor
- 33: elastisches Element

- T: Verzweigungspunkt

## Patentansprüche

1. Bremsanlage für Kraftfahrzeuge vom Typ "Brake-by-Wire", insbesondere ohne einen Bremskraftverstärker, mit einer mittels eines Bremspedals (19) betätigbaren hydraulischen Betätigungseinrichtung (2), an welche Radbremsen (6, 7, 8, 9) angeschlossen sind, und einer hydraulisch betätigbaren Simulationseinrichtung (3) mit mindestens einem elastischen Element (33), die dem Fahrzeugführer ein angenehmes Pedalgefühl vermittelt, **dadurch gekennzeichnet, dass** die Betätigungseinrichtung (2) über eine hydraulische Verbindung (4) mit der Simulationseinrichtung (3) verbunden oder verbindbar ist, wobei die hydraulische Verbindung (4) über ein elektrisch steuerbares Absperrventil (5) mit einem, insbesondere unter Atmosphärendruck stehenden, Druckmittelbehälter (10) verbunden ist, und wobei bei einer Betätigung des Bremspedals (19), insbesondere in der Betriebsart "Brake-by-Wire", das Absperrventil (5) erst in seine geschlossene Schaltstellung umgeschaltet wird, wenn der Betätigungsweg des Bremspedals (19) einen vorgegebenen Grenzwert überschreitet.

2. Bremsanlage nach Anspruch 1, **dadurch gekennzeichnet, dass** das Absperrventil (5) als stromlos offenes elektrisch ansteuerbares Ventil ausgeführt ist.

3. Bremsanlage nach Anspruch 1 oder 2, **dadurch gekennzeichnet, dass** die Betätigungseinrichtung (2) einen Druckraum (15) für Druckmittel aufweist, welches bei Betätigung des Bremspedals (19) in die hydraulische Verbindung (4) gefördert wird.

4. Bremsanlage nach einem der Ansprüche 1 bis 3, **dadurch gekennzeichnet, dass** die Betätigungseinrichtung (2) einen Sensor (30), insbesondere Wegsensor, zur Erfassung eines Betätigungswegs des Bremspedals (19) umfasst.

5. Bremsanlage nach einem der Ansprüche 1 bis 4, **dadurch gekennzeichnet, dass** diese derart ausgeführt ist, dass ein Zuschalten der Simulationseinrichtung (3) erst nach einem Schließen des Absperrventil (5) gegeben ist.

6. Bremsanlage nach einem der Ansprüche 1 bis 5, **dadurch gekennzeichnet, dass** diese eine elektrisch steuerbare Druckbereitstellungseinrichtung (12) umfasst.

7. Bremsanlage nach Anspruch 6, **dadurch gekennzeichnet, dass** die Druckbereitstellungseinrichtung (12) durch eine Zylinder-Kolben-Anordnung gebildet wird, deren Kolben durch einen elektromechanischen Aktuator betätigbar ist.

8. Bremsanlage nach einem der Ansprüche 1 bis 7, **dadurch gekennzeichnet, dass** außerhalb der Betriebsart "Brake-by-Wire" (Rückfallbetriebsart) die Simulationseinrichtung (3) drucklos geschaltet ist.

9. Verfahren zum Betreiben einer Bremsanlage für Kraftfahrzeuge vom Typ "Brake-by-Wire", insbesondere ohne einen Bremskraftverstärker, mit einer mittels eines Bremspedals (19) betätigbaren hydraulischen Betätigungseinrichtung (2), an welche Radbremsen (6, 7, 8, 9) angeschlossen sind, und einer hydraulisch betätigbaren Simulationseinrichtung (3) mit mindestens einem elastischen Element (33), die dem Fahrzeugführer ein angenehmes Pedalgefühl vermittelt, **dadurch gekennzeichnet, dass** die Betätigungseinrichtung (2) über eine hydraulische Verbindung (4) mit der Simulationseinrichtung (3) verbunden oder verbindbar ist, wobei die hydraulische Verbindung (4) über ein elektrisch steuerbares Absperrventil (5) mit einem, insbesondere unter Atmosphärendruck stehenden, Druckmittelbehälter (10) verbunden ist, und dass bei einer Betätigung des Bremspedals (19), insbesondere in der Betriebsart "Brake-by-Wire", das Absperrventil (5) erst in seine geschlossene Schaltstellung umgeschaltet wird, wenn der Betätigungsweg des Bremspedals (19) einen vorgegebenen Grenzwert überschreitet.

10. Verfahren nach Anspruch 9, **dadurch gekennzeichnet, dass** der Grenzwert in Abhängigkeit von der Fahrsituation vorgegeben wird.

11. Verfahren nach Anspruch 9 oder 10, **dadurch gekennzeichnet, dass** dieses in einer Bremsanlage nach einem der Ansprüche 2 bis 8 durchgeführt wird.

## Claims

1. Brake system of the type "brake-by-wire" for motor vehicles, in particular a brake system that does not have a brake power assist unit, having a hydraulic actuation device (2) that can be actuated by means of a brake pedal (19), to which actuation device are connected wheel brakes (6, 7, 8, 9), and having a hydraulically actuated simulation device (3) having at least an elastic element (33) that conveys to the vehicle driver a comfortable pedal sensation, **characterized in that** the actuation device (2) is connected or can be connected by way of a hydraulic connection (4) to the simulation device (3), wherein the hydraulic connection (4) is connected by way of an electrically controllable shut-off valve (5) to a pressure medium container (10) that is in particular subjected to atmospheric pressure, and wherein as brake pedal (19) is actuated, in particular in the "brake-by-wire" operating mode, the shut-off valve (5) is only switched into its closed switch position if the actuating travel of the brake pedal (19) exceeds a predetermined limit value.

2. Brake system according to Claim 1, **characterized in that** the shut-off valve (5) is embodied as a de-energized open electrically controllable valve.

3. Brake system according to Claim 1 or 2, **characterized in that** the actuation device (2) comprises a pressure chamber (15) for pressure medium that is conveyed into the hydraulic connection (4) as the brake pedal (19) is actuated.

4. Brake system according to any one of Claims 1 to 3, **characterized in that** the actuation device (2) comprises a sensor (30), in particular a travel sensor, for sensing an actuation travel of the brake pedal (19).

5. Brake system according to any one of Claims 1 to 4, **characterized in that** said brake system is embodied in such a manner that the simulation device (3) is only connected after the shut-off valve (5) is closed.

6. Brake system according to any one of Claims 1 to 5, **characterized in that** said brake system comprises an electrically controllable pressure supplying device (12).

7. Brake system according to Claim 6, **characterized in that** the pressure supplying device (12) is embodied by a cylinder-piston arrangement, the piston of which can be actuated by means of an electromechanical actuator.

8. Brake system according to any one of Claims 1 to 7, **characterized in that** outside the "brake-by-wire" operating mode (fall-back operating mode) the simulation device (3) is switched to the no-pressure state.

9. Method for operating a brake system of the type "brake-by-wire" for motor vehicles, in particular a brake system that does not have a brake power assist unit, having a hydraulic actuation device (2) that can be actuated by means of a brake pedal (19), to which actuation device are connected wheel brakes (6, 7, 8, 9), and having a hydraulically actuated simulation device (3) having at least an elastic element (33) that conveys to the vehicle driver a comfortable pedal sensation, **characterized in that** the actuation device (2) is connected or can be connected by way of a hydraulic connection (4) to the simulation device (3), wherein the hydraulic connection (4) is connected by way of an electrically controllable shut-off valve (5) to a pressure medium container (10) that is in particular subjected to atmospheric pressure, and **in that** as brake pedal (19) is actuated, in particular in the "brake-by-wire" operating mode, the shut-off valve (5) is only switched into its closed switch position if the actuating travel of the brake pedal (19) exceeds a predetermined limit value.

10. Method according to Claim 9, **characterized in that** the limit value is predetermined in dependence upon the driving situation.

11. Method according to Claim 9 or 10, **characterized in that** said method is carried out in a brake system according to any one of Claims 2 to 8.

## Revendications

1. Système de freinage pour véhicules automobiles de type « Brake-by-Wire » (système de freinage intégré), notamment sans servofrein, comprenant un dispositif d'actionnement hydraulique (2) qui peut être actionné au moyen d'une pédale de frein (19), auquel sont raccordés des freins de roue (6, 7, 8, 9), et un dispositif de simulation (3) qui peut être actionné hydrauliquement comportant au moins un élément élastique (33) qui communique au conducteur une sensation de pédale agréable, **caractérisé en ce que** le dispositif d'actionnement (2) est relié ou peut être relié au dispositif de simulation (3) par le biais d'une liaison hydraulique (4), la liaison hydraulique (4) étant reliée à un réservoir à fluide sous pression (10), se trouvant notamment sous pression atmosphérique, par le biais d'une vanne d'arrêt (5) qui peut être commandée électriquement, et lors d'un actionnement de la pédale de frein (19), notamment dans le mode de fonctionnement « Brake-by-Wire », la vanne d'arrêt (5) n'étant basculée dans sa position de commutation fermée que lorsque l'actionnement de la pédale de frein (19) dépasse une valeur de seuil prédéfinie.

2. Système de freinage selon la revendication 1, **caractérisé en ce que** la vanne d'arrêt (5) est réalisée sous la forme d'une vanne qui peut être commandée électriquement ouverte au repos.

3. Système de freinage selon la revendication 1 ou 2, **caractérisé en ce que** le dispositif d'actionnement (2) possède une chambre de compression (15) pour un fluide sous pression qui est refoulé dans la liaison hydraulique (4) lors de l'actionnement de la pédale de frein (19).

4. Système de freinage selon l'une des revendications 1 à 3, **caractérisé en ce que** le dispositif d'actionnement (2) comprend un capteur (30), notamment un capteur de course, destiné à détecter un actionnement de la pédale de frein (19).

5. Système de freinage selon l'une des revendications 1 à 4, **caractérisé en ce que** celui-ci est réalisé de telle sorte qu'une mise en circuit du dispositif de simulation (3) n'est donnée qu'après une fermeture de la vanne d'arrêt (5).

6. Système de freinage selon l'une des revendications 1 à 5, **caractérisé en ce que** celui-ci comprend un dispositif de fourniture de pression (12) qui peut être commandé électriquement.

7. Système de freinage selon la revendication 6, **caractérisé en ce que** le dispositif de fourniture de pression (12) est formé par un arrangement cylindre-piston dont le piston peut être actionné par un actionneur électromécanique.

8. Système de freinage selon l'une des revendications 1 à 7, **caractérisé en ce qu'**en-dehors du mode de fonctionnement « Brake-by-Wire » (mode de fonctionnement à recul), le dispositif de simulation (3) est mis hors pression.

9. Procédé pour faire fonctionner un système de freinage pour véhicules automobiles de type « Brake-by-Wire » (système de freinage intégré), notamment sans servofrein, comprenant un dispositif d'actionnement hydraulique (2) qui peut être actionné au moyen d'une pédale de frein (19), auquel sont raccordés des freins de roue (6, 7, 8, 9), et un dispositif de simulation (3) qui peut être actionné hydrauliquement comportant au moins un élément élastique (33) qui communique au conducteur une sensation de pédale agréable, **caractérisé en ce que** le dispositif d'actionnement hydraulique (2) est relié ou peut être relié au dispositif de simulation (3) par le biais d'une liaison hydraulique (4), la liaison hydraulique (4) étant reliée à un réservoir à fluide sous pression (10), se trouvant notamment sous pression atmosphérique, par le biais d'une vanne d'arrêt (5) qui peut être commandée électriquement, et **en ce que** lors d'un actionnement de la pédale de frein (19), notamment dans le mode de fonctionnement « Brake-by-Wire », la vanne d'arrêt (5) n'est basculée dans sa position de commutation fermée que lorsque la course d'actionnement de la pédale de frein (19) dépasse une valeur de seuil prédéfinie.

10. Procédé selon la revendication 9, **caractérisé en ce que** la valeur limite est prédéfinie en fonction de la situation de conduite.

11. Procédé selon la revendication 9 ou 10, **caractérisé en ce que** celui-ci est mis en oeuvre dans un système de freinage selon l'une des revendications 2 à 8.
